# EUROPÄISCHE PATENTSCHRIFT

(11) **EP 2 839 934 B1**
(45) Veröffentlichungstag und Bekanntmachung des Hinweises auf die Patenterteilung: **10.11.2021**
(21) Anmeldenummer: 14002760.8
(22) Anmeldetag: 06.08.2014
(51) Int. Cl.: B25J 9/16

(54) **Verfahren zum Steuern eines Roboters**
Method for controlling a robot
Procédé de commande d'un robot

(30) Priorität: 20.08.2013 DE 102013013875
(43) Veröffentlichungstag der Anmeldung: 25.02.2015
(73) Patentinhaber: KUKA Deutschland GmbH, 86165 Augsburg (DE)
(72) Erfinder: Ueberle, Marc-Walter, 86316 Friedberg (DE); Keyl, Hartmut, 86161 Augsburg (DE)
(74) Vertreter: Schlotter, Alexander Carolus Paul

(56) Entgegenhaltungen:
- EP-A1- 1 598 156
- EP-A1- 2 113 344
- EP-A2- 2 639 662
- US-A1- 2010 145 515
- None

## Beschreibung

Die vorliegende Erfindung betrifft ein Verfahren zum Steuern eines Roboters sowie ein Steuermittel und ein Computerprogrammprodukt zur Durchführung des Verfahrens und einen Roboter mit einem solchen Steuermittel.

Nach betriebsinterner Praxis werden Roboter überwacht und auf Basis der Überwachung Fehlerreaktionen ausgeführt, insbesondere der Roboter stillgesetzt.

Dabei können unterschiedliche Fehlerreaktionen ausgeführt werden. So kann insbesondere ein sogenannter STOP 0 ausgeführt werden, bei dem ein oder mehrere Motoren unverzüglich von einer Energieversorgung getrennt werden und mechanische Bremsen einfallen. Diese Fehlerreaktion weist jedoch verschiedene Nachteile auf. So kann sich dabei insbesondere ein längerer Bremsweg und/oder eine höhere Belastung des Roboters ergeben. Des Weiteren hängt die Stillsetzung bei dieser Fehlerreaktion ausschließlich von der mechanischen Bremse ab. Zudem kann der Roboter beim Stillsetzen von einer vorgegebenen Bahn abweichen.

Daher kann nach betriebsinterner Praxis auch ein sogenannter STOP 1 oder STOP 2 ausgeführt werden, bei dem ein oder mehrere Motoren zunächst als Motorbremsen wirken und erst anschließend von einer Energieversorgung getrennt werden (STOP 1) oder mit dieser verbunden bleiben (STOP 2). Hierdurch kann ein Bremsweg und/oder eine Belastung des Roboters reduziert werden. Mit der Motorbremse steht neben der mechanischen Bremse eine weitere Bremse zur Verfügung, was die Zuverlässigkeit der Fehlerreaktion erhöht. Vorteilhafterweise kann bahntreu gebremst werden.

Insbesondere eine solche motoraktive Fehlerreaktion setzt jedoch eine ausreichende Funktion der entsprechenden Motoren voraus. Ist diese nicht ausreichend sichergestellt, muss entsprechend bei einem Versagen der motoraktiven Fehlerreaktion auf eine an sich nachteilige Fehlerreaktion, beispielsweise einen STOP 0, umgeschaltet oder dieser sogar von vorneherein vorgesehen werden. Erfolgt das Umschalten auf Basis einer kinematischen Überwachung, beispielsweise einer positions- oder geschwindigkeitsbasierten Bremsrampenüberwachung, kann dies nachteilig eine Reaktionszeit verlängern.

Aus der EP 1 598 156 A1 ist ein System zum Detektieren einer Abnormalität eines mobilen Roboters bekannt, der wenigstens einen Antriebsmotor, einen internen Sensor, der eine Zustandsgröße des Inneren des Roboters erfasst, und eine Steuereinheit aufweist, die ein Abnormalitäts-Grad-Unterscheidungsmittel und ein Stabil-Zustands-Fahrmittel zum Verfahren des Roboters in einen stabilen Zustand als Antwort auf den unterschiedenen Abnormalitäts-Grad umfasst.

Die nicht vorveröffentlichte EP 2 639 662 A2 betrifft ein Servosystem mit einem Servomotor und einer Sicherheitseinheit, die eine elektrische Energieversorgung des Motors unterbricht, wenn eine Geschwindigkeit, eine Position, eine Beschleunigung, eine Bewegungsgröße und/oder-richtung und/oder ein Drehmoment des Motors außerhalb eines ersten Betriebsbereichs ist, und eine Warnung ausgibt, wenn die Geschwindigkeit, Position, Beschleunigung, Bewegungsgröße und/oder-richtung und/oder das Drehmoment innerhalb des ersten und außerhalb eines zweiten Betriebsbereichs ist, der enger als der erste Betriebsbereichs ist.

Die EP 2 113 334 A1 betrifft ein Verfahren zum Überwachen eines Manipulators, wobei der Manipulator in einem ersten Modus stillgesetzt wird, wenn eine überwachte Zustandsgröße des Manipulators in einem ersten Bereich liegt, und in einem zweiten Modus stillgesetzt wird, wenn die Zustandsgröße des Manipulators in einem zweiten Bereich liegt

Eine Aufgabe einer Ausführung der vorliegenden Erfindung ist es, den Betrieb eines Roboters zu verbessern.

Diese Aufgabe wird durch ein Verfahren mit den Merkmalen des Anspruchs 1 gelöst. Anspruch 6 stellt ein Steuermittel, Anspruch 11 ein Computerprogrammprodukt zur Durchführung eines erfindungsgemäßen Verfahrens unter Schutz, Anspruch 10 einen Roboter mit einem erfindungsgemäßen Steuermittel. Die Unteransprüche betreffen vorteilhafte Weiterbildungen.

Nach einem Aspekt der vorliegenden Erfindung wird ein Roboter überwacht, insbesondere durch ein Überwachungsmittel zum Überwachen des Roboters. Diese Überwachung wird nachfolgend auch als Roboterüberwachung bezeichnet.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen und damit insbesondere den Roboter steuern kann. Unter einem Steuern wird vorliegend verallgemeinernd auch ein Regeln verstanden, d.h. eine Vorgabe von Stellgrößen auf Basis vorgegebener Sollgrößen und erfasster Ist-Größen.

Das Überwachen des Roboters umfasst in einer Ausführung das Erfassen einer oder mehrerer, insbesondere kinematischer, Zustandsgrößen des Roboters, insbesondere einer oder mehrerer Gelenkkoordinaten und/oder einer Lage und/oder Orientierung eines oder mehrerer roboterfester Referenzen, insbesondere eines Werkzeugreferenzsystems ("Tool Center Point" TCP), und/oder einer zeitlichen Ableitung hiervon, insbesondere also einer oder mehrerer Gelenkgeschwindigkeiten und/oder -beschleunigungen und/oder Geschwindigkeiten und/oder Beschleunigungen einer oder mehrerer roboterfester Referenzen. Zusätzlich oder alternativ kann das Überwachen des Roboters das Erfassen einer oder mehrerer Kraftgrößen des Roboters, insbesondere einer oder mehrerer an- und/oder abtriebsseitigen Gelenkkräften und/oder Kräften an bzw. auf eine oder mehrere roboterfeste Referenzen umfassen. Zur kompakteren Darstellung werden auch antiparallele Kräftepaare, d.h. Drehmomente, verallgemeinernd als Kraft im Sinne der vorliegenden Erfindung bezeichnet. Zusätzlich oder alternativ kann das Überwachen des Roboters das Erfassen einer oder mehrerer anderer Zustandsgrößen des Roboters umfassen, insbesondere thermischer Zustandsgrößen wie etwa einer Temperatur eines oder mehrerer Motoren oder dergleichen. Zusätzlich oder alternativ kann das Überwachen des Roboters das Erfassen einer oder mehrerer Umgebungsgrößen des Roboters umfassen, insbesondere die Anwesenheit von Hindernissen, eines Zustands einer Schutzeinrichtung wie etwa die Geschlossenheit einer Schutztür oder die (Nicht)Betätigung eines Nothalt-Schalters oder dergleichen. Hierzu kann das Überwachungsmittel zum Überwachen des Roboters entsprechende Sensoren, insbesondere Gelenksensoren wie Encoder, Drehgeber oder dergleichen, Kraft-, insbesondere Drehmomentsensoren, Temperatursensoren, Raumüberwachungssensoren, Schutzeinrichtungsüberwachungssensoren, Nothalt-Schalter oder dergleichen aufweisen.

Das Überwachen des Roboters umfasst in einer Weiterbildung das Vergleichen einer oder mehrerer der erfassten Größen mit vorgegebenen konstanten oder variablen Grenzwerten, insbesondere für eine Position und/oder Geschwindigkeit des Roboters, eine auf den Roboter wirkende bzw. vom Roboter auf seine Umgebung ausgeübte Kraft oder dergleichen. In einer Ausführung umfasst das Überwachen des Roboters eine Überwachung eines vorgegebenen Raumes, insbesondere eines kartesischen Arbeits- und/oder Schutzraums, den der Roboter nicht verlassen bzw. in den der Roboter nicht eindringen darf, und/oder eines, insbesondere entsprechenden, Gelenkkoordinatenraums, eine Überwachung einer ein- oder mehrdimensionalen Geschwindigkeit, insbesondere einer Geschwindigkeit einer roboterfesten Referenz und/oder einer Gelenkgeschwindigkeit, eine Kollisionsüberwachung, eine Bremsüberwachung, insbesondere das Einhalten vorgegebener Verzögerungen, und/oder eine Stillstandsüberwachung.

Auf Basis der Roboterüberwachung wird, insbesondere durch ein Fehlerreaktionsmittel, eine Fehlerreaktion ausgeführt, die, insbesondere durch ein Auswahlmittel, aus einer Anzahl vorgegebener Fehlerreaktionen ausgewählt worden ist.

Die Anzahl vorgegebener Fehlerreaktionen umfasst eine oder mehrere motoraktive Fehlerreaktionen und eine oder mehrere motorpassive Fehlerreaktionen. Unter einer motoraktiven Fehlerreaktion im Sinne der vorliegenden Erfindung wird insbesondere eine Fehlerreaktion verstanden, bei der ein oder mehrere, insbesondere alle, (Antriebs)Motoren des Roboters aktuiert, insbesondere gesteuert, werden, unter einer motorpassiven Fehlerreaktion entsprechend eine Fehlerreaktion, bei der diese(r) Motor(en) nicht aktuiert, insbesondere nicht angesteuert, wird bzw. werden. In einer Ausführung ist eine motoraktive Fehlerreaktion dadurch gekennzeichnet, dass Sollwerte, insbesondere Soll-Positions-, -Geschwindigkeits-, -Kraft- und/oder -Stromwerte, für wenigstens einen Motor generiert und an diesen übermittelt werden, während eine motorpassive Fehlerreaktion dadurch gekennzeichnet ist, dass dieser Motor von seiner Energieversorgung getrennt ist.

Eine motoraktive Fehlerreaktion kann insbesondere ein sogenannter STOP 1 sein. Entsprechend umfasst die Anzahl vorgegebener Fehlerreaktionen in einer Ausführung ein Motorbremsen eines oder mehrerer, insbesondere aller, (Antriebs)Motoren des Roboters mit anschließender Energietrennung. Unter einem Motorbremsen wird vorliegend insbesondere ein Steuern des Motors bzw. der Motoren derart verstanden, dass diese einer Bewegung des Roboters entgegenwirken bzw. diesen abbremsen, vorzugsweise stillsetzen. Unter einer anschließenden Energietrennung wird vorliegend insbesondere ein Unterbrechen oder Trennen des Motors von einer Energieversorgung verstanden, nachdem der entsprechende Motor zum Stillstand gekommen und in einer Weiterbildung eine mechanische Bremse eingefallen bzw. geschlossen worden ist.

Eine motoraktive Fehlerreaktion kann insbesondere auch ein sogenannter STOP 2 sein. Entsprechend umfasst die Anzahl vorgegebener Fehlerreaktionen in einer Ausführung ein Motorbremsen eines oder mehrerer, insbesondere aller, (Antriebs)Motoren des Roboters ohne anschließende Energietrennung bzw. derart, dass der entsprechende Motor auch nach Erreichen des Stillstandes mit seiner Energieversorgung verbunden bleibt.

Eine motoraktive Fehlerreaktion kann insbesondere auch eine sogenannte Nachgiebigkeitsregelung sein. Hierunter wird vorliegend insbesondere eine Steuerung eines oder mehrerer, insbesondere aller, (Antriebs)Motoren des Roboters derart verstanden, dass der Roboter manuell bewegt werden kann, insbesondere eine sogenannte Gravitationskompensationsregelung, in der der Roboter nur bei Abwesenheit äußerer Kräfte eine Pose hält und andernfalls äußeren, insbesondere manuell aufgeprägten, Kräften nachgibt bzw. ausweicht. Eine Nachgiebigkeitsregelung kann beispielsweise durch Reduzierung eines Proportionalanteils und/oder Wegfall eines Integralanteils einer PI(D)-Positionsregelung, durch eine Kraftregelung, insbesondere mit einer Vorgabe einer vom Roboter auf die Umgebung ausgeübten Nullkraft, oder dergleichen implementiert sein.

Eine motoraktive Fehlerreaktion kann insbesondere auch eine Rückzugsbewegung sein. Hierunter wird vorliegend insbesondere eine Steuerung eines oder mehrerer, insbesondere aller, (Antriebs)Motoren des Roboters derart verstanden, dass der Roboter sich auf einer vorgegebenen Bahn aus einer Pose zurückzieht, die er bei oder nach Auslösen der Überwachung des Roboters, beispielsweise bei Erkennen einer Kollision, eingenommen hat. Insbesondere können Motoren gegensinnig zu einer Aktuierung vor der Fehlerreaktion reversiert werden, um den Roboter, vorzugsweise unter gegensinnigem Durchlaufen einer Bahn, die er bis zur Fehlerreaktion abgefahren hat, zurückzuziehen.

Vor, bei oder nach Erreichen eines Stillstands kann in einer Weiterbildung eine motoraktive Fehlerreaktion ein Einfallen einer oder mehrerer mechanischer Bremsen umfassen.

Eine motorpassive Fehlerreaktion kann insbesondere ein sogenannter STOP 0 sein. Entsprechend umfasst die Anzahl vorgegebener Fehlerreaktionen in einer Ausführung eine unverzügliche Energietrennung eines oder mehrerer, insbesondere aller, Motoren des Roboters ohne Motorbremsen. Eine andere motorpassive Fehlerreaktion kann beispielsweise das Einfallen mechanischer Verrastungen bzw. Sperren sein.

Nach einem Aspekt der vorliegenden Erfindung wird, insbesondere durch ein Überwachungsmittel zum Überwachen einer Funktionsfähigkeit wenigstens eines Motors des Roboters, eine Funktionsfähigkeit eines oder mehrerer, insbesondere aller, Motoren, insbesondere Antriebsmotoren, des Roboters überwacht und, insbesondere durch ein Auswahlmittel, die auszuführende Fehlerreaktion für einen oder mehrere, insbesondere alle, Motoren, insbesondere Antriebsmotoren, des Roboters auf Basis dieser Überwachung der Funktionsfähigkeit des Motors bzw. der Motoren des Roboters ausgewählt. Unter einem Antriebsmotor wird vorliegend insbesondere ein Motor zum Aktuieren eines Gelenks bzw. Freiheitsgrades des Roboters verstanden. In einer Ausführung sind der bzw. die Motoren Elektromotoren, insbesondere Synchron-, Asynchron- oder Gleichstrommotoren. Diese Überwachung wird nachfolgend auch als Funktionsfähigkeitsüberwachung bezeichnet.

Die ausgewählte, auszuführende Fehlerreaktion kann motorspezifisch sein. Hierunter wird vorliegend insbesondere verstanden, dass die Funktionsfähigkeit wenigstens eines Motors des Roboters überwacht und auf Basis dieser Überwachung eine Fehlerreaktion für diesen Motor ausgewählt und ausgeführt wird. In einer Ausführung wird entsprechend eine Funktionsfähigkeit eines ersten Motors des Roboters überwacht und auf Basis dieser ersten Funktionsfähigkeitsüberwachung eine Fehlerreaktion für diesen ersten Motor ausgewählt und ausgeführt, und, insbesondere parallel und/oder unabhängig, eine Funktionsfähigkeit eines zweiten Motors des Roboters überwacht und auf Basis dieser zweiten Funktionsfähigkeitsüberwachung eine Fehlerreaktion für diesen zweiten Motor ausgewählt und ausgeführt.

Gleichermaßen kann die ausgewählte, auszuführende Fehlerreaktion roboterglobal sein. Hierunter wird vorliegend insbesondere verstanden, dass die Funktionsfähigkeit eines oder mehrerer, insbesondere aller (Antriebs)Motoren des Roboters überwacht und auf Basis dieser globalen Funktionsfähigkeitsüberwachung eine Fehlerreaktion für alle Motoren, insbesondere alle Antriebsmotoren, ausgewählt und ausgeführt wird. Nach diesem Aspekt kann in einer Ausführung vorteilhaft situationsangepasst die jeweils vorteilhafteste Fehlerreaktion ausgeführt werden, die zur Verfügung steht. Insbesondere kann eine motoraktive Fehlerreaktion, beispielsweise ein STOP 1, ein STOP 2, eine Nachgiebigkeitsregelung oder eine Rückzugsbewegung ausgeführt werden, falls und/oder solange die hierzu notwendigen Motoren ausreichend funktionieren. Andernfalls kann insbesondere eine andere motoraktive Fehlerreaktion, bei der diese Motoren nicht benötigt werden, oder eine motorpassive Fehlerreaktion ausgeführt werden. Es ist damit insbesondere vorteilhafterweise nicht mehr erforderlich, vorab eine an sich weniger vorteilhafte Fehlerreaktion vorzusehen, da die Zuverlässigkeit der Motoren nicht sichergestellt ist.

Die Fehlerreaktion kann in einer Ausführung vorab bzw. vor dem Ausführen der Fehlerreaktion vorausgewählt werden. Insbesondere kann die Funktionsfähigkeit ständig oder periodisch überwacht und auf dieser Basis eine Fehlerreaktion vorausgewählt werden, die dann bereits ausgewählt ist und unmittelbar ausgeführt werden kann, wenn dies auf Basis der Überwachung des Roboters erforderlich ist. So kann beispielsweise solange ein STOP 1 vorausgewählt sein, solange die Motoren des Roboters voll funktionsfähig sind. Wird festgestellt, dass wenigstens einer der Motoren nicht funktionsfähig ist, wird ein STOP 0 vorausgewählt. Auf diese Weise kann in einer Ausführung unverzüglich die jeweils beste zur Verfügung stehende Fehlerreaktion durch die Roboterüberwachung aktiviert bzw. ausgeführt werden.

Zusätzlich oder alternativ kann die Fehlerreaktion während des Ausführens der Fehlerreaktion ausgewählt, insbesondere verändert bzw. gewechselt werden. So kann beispielsweise zunächst ein STOP 1 (vor)ausgewählt und ausgeführt werden. Wird während der Ausführung des STOP 1 dann festgestellt, dass wenigstens einer der Motoren nicht mehr funktionsfähig ist, wird zum Beispiel auf einen STOP 0 gewechselt und dieser weiter ausgeführt.

In einer Ausführung werden zur Überwachung einer Funktionsfähigkeit eines Motors, insbesondere durch ein Bestimmungsmittel, ein oder mehrere Parameter des Motors ermittelt und, insbesondere durch ein Vergleichsmittel, mit einer vorgegebenen Spezifikation verglichen. Ein oder mehrere, insbesondere alle Parameter können insbesondere elektromagnetische Parameter sein, insbesondere eine ein- oder mehrdimensionale Strom-, Spannungs-, Widerstands- und/oder Magnetgröße einer oder mehrerer Wicklungen eines Elektromotors, insbesondere ein verketteter Fluss und/oder eine Drehmomentkonstante und/oder Spannungskonstante des Motors. Zur kompakteren Darstellung werden auch rein elektrische Größen und Größen, die sich aus diesen elektrischen Größen ableiten lassen, insbesondere durch Signalverarbeitungsverfahren wie Filterverfahren, Fourieranalyse und/oder Spektralanalyse, vorliegend als elektromagnetische Parameter bezeichnet. Zusätzlich oder alternativ können Parameter thermische Parameter, insbesondere eine ein- oder mehrdimensionale Temperaturgröße sein. Zusätzlich oder alternativ können Parameter kinematische Parameter des Motors sein, insbesondere ein ein- oder mehrdimensionaler Positionsfehler oder dergleichen. Zusätzlich oder alternativ können Parameter aus Residuen abgeleitet sein, insbesondere bestehen, die sich aus einem Vergleich von erfassten Ausgangsgrößen des Motors, insbesondere einer Motorposition, einer Motorgeschwindigkeit, eines Motorstroms und/oder eines Motorabtriebsmoments, mit Erwartungswerten für diese Größen ergeben.

In einer Ausführung werden ein oder mehrere der Parameter direkt erfasst. Gleichermaßen können ein oder mehrere Parameter modellbasiert erfasst werden, insbesondere mittels eines Parameteridentifikationsverfahrens, vorzugsweise eines Online-Parameteridentifikationsverfahrens, und/oder mittels eines (Störgrößen)Beobachters und/oder mittels sogenannter Parity-Equations. So kann beispielsweise ein defektes Motorlager durch die Beobachtung eines Abtriebsdrehmoments erfassbar sein.

Ein oder mehrere Parameter werden mit einer vorgegebenen Spezifikation verglichen. Die vorgegebene Spezifikation kann konstant, insbesondere unveränderlich, sein und in einer Ausführung Kenngrößen des Motors umfassen, beispielsweise eine Drehmomentkonstante, Leerstromaufnahme, ein Lagerdrehmoment oder dergleichen. Gleichermaßen kann die vorgegebene Spezifikation auch variabel sein, insbesondere im Betrieb oder bei einer Inbetriebnahme verändert werden. So kann es zweckmäßig sein, die Spezifikation zu verschärfen, wenn der Roboter mit einem anderen Roboter oder einem Menschen kooperiert, da dann die Anforderungen an ein Stillsetzen erhöht sind.

Die Funktionsfähigkeit eines Motors kann durch eine ein- oder mehrdimensionale kontinuierliche Größe angegeben werden bzw. sein, insbesondere durch eine, vorzugsweise normierte, Differenz zwischen einem oder mehreren der ermittelten Parameter und deren Spezifikation, insbesondere einem Normwert oder -bereich. Gleichermaßen kann die Überwachung einer Funktionsfähigkeit auch eine zwei- oder mehrstufige Klassifikation einer Funktionsfähigkeit umfassen. So kann insbesondere ein Motor als (voll) funktionsfähig klassifiziert werden bzw. sein, falls bzw. solange alle ermittelten Parameter innerhalb ihrer Spezifikation, insbesondere innerhalb eines vorgegebenen zulässigen Bereichs sind. Ein Motor kann als nicht funktionsfähig bzw. defekt klassifiziert werden bzw. sein, falls bzw. solange wenigstens ein, insbesondere als maßgeblich vorgegebener, Parameter außerhalb seiner Spezifikation ist. Entsprechend kann es in einer Ausführung ausreichen, wenn (irgend)ein Parameter außerhalb seiner Spezifikation ist, um den Motor als defekt zu klassifizieren. In einer anderen Ausführung kann der Motor hingegen als funktionsfähig klassifiziert bleiben, solange wenigstens alle als wesentlich vorgegebenen Parameter innerhalb ihrer Spezifikation sind.

Eine solche zweistufige Klassifikation in "funktionsfähig" bzw. "nicht funktionsfähig" kann in einer Weiterbildung in einer drei- oder mehrstufigen Klassifikation verfeinert sein. So kann insbesondere ein Motor als eingeschränkt funktionsfähig klassifiziert werden bzw. sein, falls bzw. solange alle oder wenigstens alle als maßgeblich vorgegebenen Parameter außerhalb ihrer vorgegebenen Spezifikation, jedoch noch innerhalb einer vorgegebenen weiteren Spezifikation liegen.

Dies ermöglicht in einer Ausführung eine differenzierte Auswahl der Fehlerreaktion. So kann in einer Ausführung bei einer Geschwindigkeitsüberwachung des Roboters ein STOP 2 ausgewählt werden, solange die Motoren als voll oder wenigstens eingeschränkt funktionsfähig klassifiziert sind, da hier ein vermindertes Motorbremsen mit eingeschränkt funktionsfähigen Motoren in der Regel ausreicht, und ein STOP 0 ausgewählt werden, falls wenigstens ein Motor als nicht funktionsfähig klassifiziert wird. Umgekehrt kann in einer Ausführung bei einer Arbeitsraumüberwachung, bei der höhere Anforderungen an ein überwachungsbedingtes Stillsetzen des Roboters bestehen, ein STOP 2 ausgewählt werden, solange die Motoren als voll funktionsfähig klassifiziert sind, und ein STOP 0 ausgewählt werden, falls wenigstens ein Motor als nur eingeschränkt oder nicht funktionsfähig klassifiziert wird.

Roboter- und Funktionsfähigkeitsüberwachung können, wenigstens teilweise, zusammenfallen bzw. durch dasselbe Überwachungsmittel ausgebildet bzw. ausgeführt werden. So kann beispielsweise eine Überwachung von Gelenkkräften einerseits in einer Kollisionsüberwachung eine Kollision des Roboters mit seiner Umgebung auf Basis eines außerplanmäßigen Kraftverlaufs, insbesondere eines raschen Kraftanstiegs, erkennen. Andererseits kann die Überwachung von Gelenkkräften, zum Beispiel durch einen langsameren, kontinuierlichen Kraftanstieg, eine zunehmende Lagerreibung oder dergleichen erkennen, die die Funktionsfähigkeit des Motors beeinträchtigt.

Zusätzlich oder alternativ kann die auszuführende Fehlerreaktion für einen oder mehrere, insbesondere alle, Motoren, insbesondere Antriebsmotoren, des Roboters auf Basis der Funktionsfähigkeitsüberwachung und der Roboterüberwachung ausgewählt werden. So kann beispielsweise die Roboterüberwachung eine Kollisionsüberwachung bzw. -erkennung und eine Stillstandsüberwachung umfassen und eine motoraktive Fehlerreaktion auswählen, wenn die Kollisionserkennung anspricht, und eine motorpassive Fehlerreaktion auswählen, wenn die Stillstandsüberwachung anspricht. Dann kann zusätzlich die Funktionsfähigkeitsüberwachung auch für die Kollisionserkennung die motorpassive Fehlerreaktion (vor)auswählen bzw. zu dieser wechseln, wenn eine motoraktive Fehlerreaktion aufgrund mangelnder Funktionsfähigkeit des bzw. der Motoren nicht möglich oder vorteilhaft ist.

Nach der vorliegenden Erfindung wird, insbesondere durch ein Überwachungsmittel zum Überwachen einer Abtriebsgröße wenigstens eines Motors des Roboters, eine ein- oder mehrdimensionale Abtriebsgröße eines oder mehrerer, insbesondere aller, Motoren, insbesondere Antriebsmotoren, des Roboters überwacht und, insbesondere durch ein Auswahlmittel, die auszuführende Fehlerreaktion für einen oder mehrere, insbesondere alle, Motoren, insbesondere Antriebsmotoren, des Roboters auf Basis dieser Überwachung der Abtriebsgröße des Motors bzw. der Motoren des Roboters ausgewählt, insbesondere von einer motoraktiven zu einer motorpassiven Fehlerreaktion gewechselt. Diese Überwachung wird nachfolgend auch als Abtriebsgrößenüberwachung bezeichnet. Sie kann in einer Ausführung mit der vorstehend erläuterten Funktionsfähigkeitsüberwachung kombiniert sein.

Eine Abtriebsgröße eines Motors kann in einer Ausführung eine Kraft, insbesondere ein antiparalleles Kräftepaar bzw. ein Drehmoment umfassen, insbesondere sein, die bzw. das der Motor auf eine Gelenkachse des Roboters ausübt, insbesondere ein Drehmoment, das an einer Abtriebswelle des Motors oder eines damit verbundenen Getriebes erfasst wird und/oder, insbesondere basierend auf erfassten Motorströmen und Motorkenngrößen, insbesondere einer Drehmomentkonstante, berechnet wird. Zusätzlich oder alternativ kann eine Abtriebsgröße eine (zeit)integrale Größe hiervon, insbesondere eine Arbeit und/oder Leistung, umfassen.

Zur kompakteren Darstellung wird auch eine Abweichung einer Kraft oder einer diese bestimmenden Größe, insbesondere eines Motorstroms, von einer vorgegebenen Sollkraft bzw. einer diese bestimmenden Sollgröße als Kraft bezeichnet. Entsprechend kann in einer Ausführung eine Abtriebsgröße eines Motors eine Abweichung einer Ist-Kraft von einer vorgegebenen Sollkraft, insbesondere ein Drehmomentregel- bzw. -schleppfehler und/oder ein Motorstromregel- bzw. - schleppfehler umfassen, insbesondere sein.

Wie vorstehend ausgeführt, kann eine motoraktive Fehlerreaktion, beispielsweise ein STOP 1 oder STOP 2 vorteilhaft sein, insbesondere beim Abfahren einer sogenannten Bremsrampe, bei der ein oder mehrere Motoren des Roboters vorgegebene Verzögerungen bewirken. Die Einhaltung einer solchen Bremsrampe wird bisher nach betriebsinterner Praxis durch Überwachen eines Positions- oder Geschwindigkeitsverlaufs überwacht. Wenn stattdessen oder zusätzlich nach diesem Aspekt auch die Abtriebsgröße des bremsenden Motors bzw. die Abtriebsgrößen der bremsenden Motoren überwacht werden, kann hier ein Fehler früher erkannt werden. Denn während die Positions- oder Geschwindigkeitsüberwachung erst in der trägheitsbehafteten Reaktion des Roboters ein fehlerhaftes Bremsdrehmoment erkennen kann und darüber hinaus robust gegenüber dynamischen Reaktionsmomenten, insbesondere Beschleunigungsmomenten und Gewichtsmomenten, und externen Störmomenten ausgelegt werden muss, überwacht die Abtriebsgrößenüberwachung bereits dieses Bremsdrehmoment selber und kann so rascher beispielsweise zu einem STOP 0 umschalten. Insbesondere hierzu kann in einer Weiterbildung die Abtriebsgrößenüberwachung anstatt in einer Robotersteuerung direkt in der Motor- bzw. Gelenksteuerung, insbesondere einer Leistungselektronik des Motors, ausgeführt werden.

Nach einem weiteren Aspekt der vorliegenden Erfindung, der mit einem oder mehreren der vorstehend erläuterten Aspekten kombiniert sein kann, werden ein oder mehrere, insbesondere alle, (Antriebs)Motoren des Roboters in einem Normalbetrieb von einem ersten Steuermittel gesteuert und bei einer Fehlerreaktion von einem hiervon verschiedenen zweiten Steuermittel gesteuert, das in einer Ausführung in sicherer Technik ausgeführt ist. Ein in sicherer Technik ausgeführtes Steuermittel im Sinne der vorliegenden Erfindung kann insbesondere redundant, diversitär und/oder einfehlersicher sein bzw. mindestens der Steuerungskategorie 2 nach EN 954-1 entsprechen.

Nach betriebsinterner Praxis werden die (Antriebs)Motoren in nicht sicherer Technik gesteuert und lediglich in sicherer Technik überwacht. Indem, wie vorstehend ausgeführt, ein Motor bei einer motoraktiven Fehlerreaktion überwacht wird, kann erforderlichenfalls auf eine motorpassive Fehlerreaktion umgeschaltet werden. Zusätzlich oder alternativ ist es nach diesem Aspekt der vorliegenden Erfindung auch möglich, dass das zweite Steuermittel, das in sicherer Technik ausgeführt ist, die Steuerung des Motors bei einer, insbesondere motoraktiven, Fehlerreaktion übernimmt.

Weitere Vorteile und Merkmale ergeben sich aus den Unteransprüchen und den Ausführungsbeispielen. Hierzu zeigt, teilweise schematisiert:
- Fig. 1:: einen Roboter mit mehreren Antriebsmotoren und einem Steuermittel nach einer Ausführung der vorliegenden Erfindung; und
- Fig. 2:: ein Verfahren zum Steuern des Roboters der Fig. 1 nach einer Ausführung der vorliegenden Erfindung.

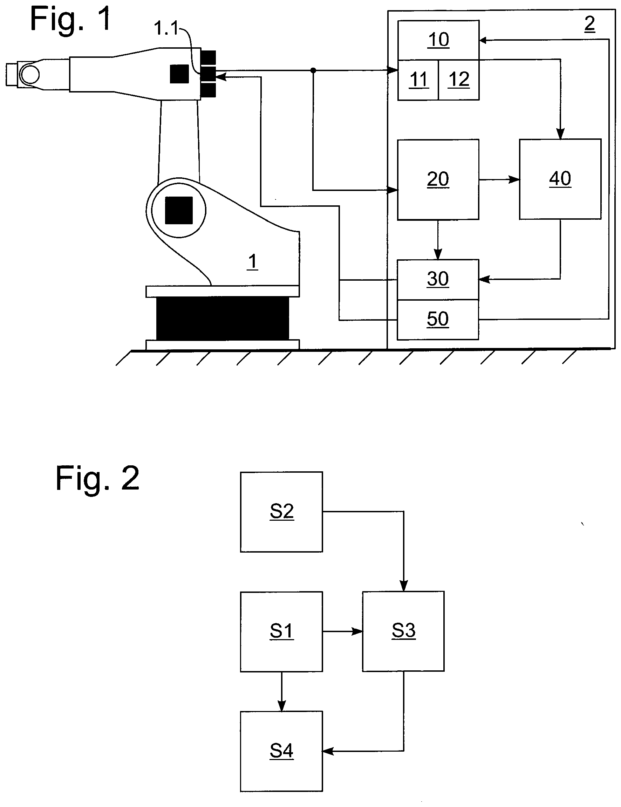

Fig. 1 zeigt einen Roboter 1 mit mehreren Antriebsmotoren und einem Steuermittel in Form einer Robotersteuerung in einem Steuerschrank 2 nach einer Ausführung der vorliegenden Erfindung, Fig. 2 ein Verfahren zum Steuern dieses Roboters nach einer Ausführung der vorliegenden Erfindung, das von dem Steuermittel 2 durchgeführt wird. Zur besseren Übersicht werden Steuermittel und Verfahren nachfolgend nur anhand eines Antriebsmotors 1.1 des Roboters erläutert, die Ausführungen gelten entsprechend auch für die anderen Antriebsmotoren.

Das Steuermittel zum Steuern weist in hard- und/oder softwaretechnischer Implementierung ein Roboterüberwachungsmittel 20 zum Überwachen des Roboters 1, ein Funktionsfähigkeitsüberwachungsmittel 10 zum Überwachen einer Funktionsfähigkeit und einer Abtriebsgröße des Motors 1.1 sowie seiner weiteren Antriebsmotoren, ein Fehlerreaktionsmittel 30 zum Ausführen einer ausgewählten von einer Anzahl vorgegebener Fehlerreaktionen auf Basis der Überwachung des Roboters durch das Roboterüberwachungsmittel 20 und ein Auswahlmittel 40 zum Auswählen der Fehlerreaktion auf Basis einer Überwachung einer Funktionsfähigkeit und einer Abtriebsgröße der Motoren des Roboters auf, wobei das Steuermittel zur Durchführung des in Fig. 2 dargestellten Verfahrens eingerichtet ist.

In einem Normalbetrieb werden die Antriebsmotoren des Roboters durch ein erstes Steuermittel 50 gesteuert, das in nicht sicherer Technik ausgeführt ist. Beispielsweise gibt das erste Steuermittel 50 Positionsbefehle an die Motorsteuerungen der Antriebsmotoren oder Strombefehle an deren Leistungselektroniken, wie in Fig. 1 durch einen gerichteten Kommunikationspfeil angedeutet.

Das Roboterüberwachungsmittel 20 überwacht in einem Schritt S1 den Roboter. Beispielsweise erfasst es Ströme, Positionen, Geschwindigkeiten und/oder Drehmomente der Antriebsmotoren. Insbesondere durch Vergleich vorgegebener Geschwindigkeitsgrenzen und der erfassten Geschwindigkeiten, gegebenenfalls nach Transformation auf eine roboterfeste Referenz, kann das Roboterüberwachungsmittel 20 eine Geschwindigkeitsüberwachung ausführen. Zusätzlich oder alternativ kann das Roboterüberwachungsmittel 20 durch Vergleich der erfassten Drehmomente mit vorgegebenen Drehmomentgrenzwerten eine Kollisionsüberwachung ausführen.

Das Funktionsfähigkeitsüberwachungsmittel 10 überwacht in einem Schritt S2 eine Abtriebsgröße der Antriebsmotoren. Hierzu kann es, wie in Fig. 1 durch den verknüpften Kommunikationspfeil angedeutet, beispielsweise direkt Drehmomente der Antriebsmotoren erfassen. Gleichermaßen kann es Ströme erfassen und diese auf Abtriebsdrehmomente transformieren.

Zusätzlich überwacht das Funktionsfähigkeitsüberwachungsmittel 10 in Schritt S2 eine Funktionsfähigkeit der Antriebsmotoren. Hieraus kann es beispielsweise durch eine Parameteridentifikation auf Basis der erfassten Positionen, Geschwindigkeiten, Spannungen, Ströme und/oder Drehmomente eine Funktionsfähigkeit ermitteln und jeden Motor als voll funktionsfähig klassifizieren, wenn die erfassten Parameter, beispielsweise eine Drehmomentkonstante, innerhalb einer Spezifikation liegen. Liegen die Parameter außerhalb dieser Spezifikation, jedoch noch innerhalb einer weiteren Spezifikation, klassifiziert das Funktionsfähigkeitsüberwachungsmittel 10 in Schritt S2 den entsprechenden Motor als eingeschränkt funktionsfähig. Liegt wenigstens ein Parameter auch außerhalb der weiteren Spezifikation, klassifiziert das Funktionsfähigkeitsüberwachungsmittel 10 in Schritt S2 den entsprechenden Motor als nicht funktionsfähig bzw. defekt.

Diese Klassifikation übermittelt das Funktionsfähigkeitsüberwachungsmittel 10 an das Auswahlmittel 40, das auf dieser Basis in einem Schritt S3 eine von mehreren Fehlerreaktionen auswählt. Wie in Fig. 1, 2 durch entsprechende Pfeile angedeutet, wählt das Auswahlmittel 40 die Fehlerreaktion dabei auch auf Basis der Überwachung durch das Roboterüberwachungsmittel 20.

Die Anzahl auswählbarer Fehlerreaktionen umfasst im Ausführungsbeispiel einen STOP 0, einen STOP 1, einen STOP 2, eine Nachgiebigkeitsregelung der Antriebsmotoren und eine Rückzugsbewegung durch gegensinniges Abfahren einer vorgegebenen, zuvor abgefahrenen Bahn.

Im Ausführungsbeispiel wählt das Auswahlmittel 40 in Schritt S3 für die Geschwindigkeitsüberwachung einen STOP 2, solange das Funktionsfähigkeitsüberwachungsmittel 10 feststellt, dass alle Antriebsmotoren voll oder wenigstens eingeschränkt funktionsfähig sind, andernfalls wählt es einen STOP 0. Für die Kollisionsüberwachung wählt das Auswahlmittel 40 in Schritt S3 eine Nachgiebigkeitsregelung, solange das Funktionsfähigkeitsüberwachungsmittel 10 feststellt, dass alle Antriebsmotoren voll funktionsfähig sind, andernfalls wählt es einen STOP 0.

Spricht nun die Geschwindigkeitsüberwachung an, während das Funktionsfähigkeitsüberwachungsmittel 10 feststellt, dass alle Antriebsmotoren voll oder wenigstens eingeschränkt funktionsfähig sind, führt das Fehlerreaktionsmittel 30 in einem Schritt S4 den vorausgewählten STOP 2 durch. Auf diese Weise kann der Roboter unter geringer mechanischer und Motorenbelastung bahntreu gebremst werden.

Dabei überwacht das Funktionsfähigkeitsüberwachungsmittel 10 weiter die Abtriebsdrehmomente und die Funktionsfähigkeit.

Ist ein von einem Antriebsmotor aufgeprägtes, überwachtes Drehmoment dabei zu gering und/oder eine Abweichung dieses Drehmoments von einem Sollmoment zu groß, wechselt das Auswahlmittel 40 auf einen STOP 0, d.h. wählt diesen nunmehr als Fehlerreaktion aus (Schritt S3). Entsprechend schaltet das Fehlerreaktionsmittel 30 in Schritt S4 unverzüglich und somit schneller als bei einer positionsbasierten Bremsrampenüberwachung auf den STOP 0 um.

Auch wenn das Funktionsfähigkeitsüberwachungsmittel 10 feststellt, dass wenigstens einer der Antriebsmotoren defekt, d.h. nicht voll oder wenigstens eingeschränkt funktionsfähig ist, wechselt das Auswahlmittel 40 auf den STOP 0. Auf diese Weise wird der vorteilhafte STOP 2 solange durchgeführt, solange die Antriebsmotoren ausreichend funktionsfähig sind, und nur bzw. erst bei Versagen wenigstens eines Antriebsmotors auf den STOP 0 übergegangen.

Spricht die Kollisionsüberwachung an, während das Funktionsfähigkeitsüberwachungsmittel 10 feststellt, dass alle Antriebsmotoren voll funktionsfähig sind, führt das Fehlerreaktionsmittel 30 in Schritt S4 die vorausgewählte Nachgiebigkeitsregelung durch. Auf diese Weise kann eine Kraft, die der Roboter auf den Kollisionspartner ausübt, minimiert werden.

Wenn jedoch das Funktionsfähigkeitsüberwachungsmittel 10 feststellt, dass wenigstens einer der Antriebsmotoren nicht voll funktionsfähig ist, d.h. defekt oder nur eingeschränkt funktionsfähig, wechselt das Auswahlmittel 40 auf den STOP 0. Auf diese Weise wird die vorteilhafte Nachgiebigkeitsregelung solange durchgeführt, solange die Antriebsmotoren ausreichend funktionsfähig sind, und nur bzw. erst bei entsprechender Einschränkung wenigstens eines Antriebsmotors auf den STOP 0 übergegangen.

Das Fehlerreaktionsmittel 30 ist in sicherer Technik ausgebildet und stellt somit ein zweites Steuermittel zum Steuern der Antriebsmotoren bei einer Fehlerreaktion dar. Wie in Fig. 1 angedeutet, übernimmt dieses sichere Steuermittel das Steuern des Antriebsmotors, wenn die Roboterüberwachung anspricht. Auf diese Weise kann im Normalbetrieb der Roboter durch das erste Steuermittel 50 und bei einer Fehlerreaktion durch das zweite Steuermittel bzw. Fehlerreaktionsmittel 30 gesteuert werden.

Das Funktionsfähigkeitsüberwachungsmittel 10 weist, wie in Fig. 1 angedeutet, ein Bestimmungsmittel 11 zum Bestimmen der vorstehend erläuterten Parameter der Antriebsmotoren und ein Vergleichsmittel 12 zum Vergleichen dieser Parameter mit einer vorgegebenen Spezifikation auf. Wie vorstehend erläutert, bestimmt das Bestimmungsmittel 11 beispielsweise Abtriebsdrehmomente der Antriebsmotoren, wie für den Antriebsmotor 1.1 exemplarisch angedeutet, und vergleicht diese mit vorgegebenen Drehmomentgrenzwerten und/oder -verläufen.

### Bezugszeichenliste

- 1: Roboter
- 1.1: Antriebsmotor
- 2: Steuerschrank (Steuermittel)
- 10: Funktionsfähigkeitsüberwachungsmittel
- 11: Bestimmungsmittel
- 12: Vergleichsmittel
- 20: Roboterüberwachungsmittel
- 30: Fehlerreaktionsmittel (zweites Steuermittel)
- 40: Auswahlmittel
- 50: erstes Steuermittel

- S1 - S4: Verfahrensschritte

## Patentansprüche

1. Verfahren zum Steuern eines Roboters (1), mit den Schritten:
Überwachen des Roboters (S1); und
Ausführen (S4) einer ausgewählten von einer Anzahl vorgegebener Fehlerreaktionen auf Basis der Überwachung des Roboters;
wobei die Fehlerreaktion auf Basis einer Überwachung (S2) einer Funktionsfähigkeit und einer Abtriebsgröße wenigstens eines Motors (1.1) des Roboters ausgewählt wird (S3),
**dadurch gekennzeichnet, dass** die Anzahl vorgegebener Fehlerreaktionen wenigstens eine motoraktive Fehlerreaktion, insbesondere ein Motorbremsen mit oder ohne anschließende Energietrennung, eine Nachgiebigkeitsregelung und/oder eine Rückzugsbewegung, und wenigstens eine motorpassive Fehlerreaktion, insbesondere eine unverzügliche Energietrennung ohne Motorbremsen, umfasst
wobei die Abtriebsgröße eine Kraft, insbesondere ein Drehmoment, und/oder eine integrale Größe hiervon, insbesondere eine Arbeit und/oder Leistung, umfasst.

2. Verfahren nachAnspruch 1, **dadurch gekennzeichnet, dass** der Motor in einem Normalbetrieb von einem ersten Steuermittel (50) und bei einer Fehlerreaktion von einem hiervon verschiedenen zweiten Steuermittel (30) gesteuert wird.

3. Verfahren nach einem der vorhergehenden Ansprüche, **dadurch gekennzeichnet, dass** die Überwachung einer Funktionsfähigkeit eine wenigstens zwei-, insbesondere wenigstens dreistufige Klassifikation einer Funktionsfähigkeit umfasst.

4. Verfahren nach einem der vorhergehenden Ansprüche, **dadurch gekennzeichnet, dass** zur Überwachung einer Funktionsfähigkeit wenigstens ein, insbesondere elektromagnetischer, thermischer oder kinematischer, Parameter des Motors ermittelt und mit einer vorgegebenen Spezifikation verglichen wird.

5. Verfahren nach einem der vorhergehenden Ansprüche, **dadurch gekennzeichnet, dass** die Fehlerreaktion vor und/oder während des Ausführens der Fehlerreaktion ausgewählt wird.

6. Steuermittel (2) zum Steuern eines Roboters (1), mit:
einem Überwachungsmittel (20) zum Überwachen des Roboters;
einem Überwachungsmittel (10) zum Überwachen einer Funktionsfähigkeit und einer Abtriebsgröße wenigstens eines Motors (1.1) des Roboters;
einem Fehlerreaktionsmittel (30) zum Ausführen einer ausgewählten von einer Anzahl vorgegebener Fehlerreaktionen auf Basis der Überwachung des Roboters; und
einem Auswahlmittel (40) zum Auswählen der Fehlerreaktion auf Basis einer Überwachung einer Funktionsfähigkeit und einer Abtriebsgröße wenigstens eines Motors des Roboters, wobei das Steuermittel zur Durchführung des Verfahrens nach einem der vorhergehenden Ansprüche eingerichtet ist.

7. Steuermittel nach dem vorhergehenden Anspruch, **gekennzeichnet durch** ein erstes Steuermittel (50) zum Steuern des Motors in einem Normalbetrieb und ein hiervon verschiedenes zweites Steuermittel (30) zum Steuern des Motors bei einer Fehlerreaktion.

8. Steuermittel nach einem der vorhergehenden Ansprüche 6 bis 7, **dadurch gekennzeichnet, dass** das Überwachungsmittel zum Überwachen einer Funktionsfähigkeit ein Bestimmungsmittel (11) zum Bestimmen wenigstens eines, insbesondere elektromagnetischen, thermischen oder kinematischen, Parameters des Motors und ein Vergleichsmittel (12) zum Vergleichen dieses Parameters mit einer vorgegebenen Spezifikation aufweist.

9. Steuermittel nach einem der vorhergehenden Ansprüche 6 bis 8, **dadurch gekennzeichnet, dass** die Abtriebsgröße eine Kraft, insbesondere ein Drehmoment, und/oder eine integrale Größe hiervon, insbesondere eine Arbeit und/oder Leistung, umfasst.

10. Roboter (1) mit mehreren, insbesondere wenigstens sechs, Antriebsmotoren (1.1), und einem Steuermittel (2) nach einem der vorhergehenden Ansprüche 6 bis 9 zum Steuern dieser Antriebsmotoren.

11. Computerprogrammprodukt mit einem Programmcode, der auf einem von einem Computer lesbaren Medium gespeichert ist, umfassend Befehle, die bewirken, dass die Vorrichtung nach einem der Ansprüche 6 bis 10 die Verfahrensschritte nach einem der Ansprüche 1 bis 5 ausführt.

## Claims

1. A method of controlling a robot (1), wherein the method comprises the steps of:
monitoring the robot (S1); and
carrying out (S4) a selected one of a number of predetermined fault responses on the basis of the monitoring of the robot;
wherein the fault response is selected (S3) on the basis of a monitoring (S2) of an operational capability and an output quantity of at least one motor (1.1) of the robot,
**characterised in that** the number of predetermined fault responses comprises at least one motor-active fault response, in particular a deceleration of the motor with or without subsequent disconnection from a source of energy, a compliance control and / or a retraction movement, and at least one motor-passive fault response, in particular an immediate disconnection from a source of energy without deceleration of the motor,
wherein the output quantity comprises a force, in particular a torque, and / or an integral quantity thereof, in particular a work and / or a power.

2. The method according to claim 1, **characterised in that**, in a normal mode of operation, the motor is controlled by a first control means (50) and, in the event of a fault response, by a second control means (30) which is different therefrom.

3. The method according to any one of the preceding claims, **characterised in that** the monitoring of an operational capability comprises a classification of an operational capability, the classification having at least two stages, in particular a classification having at least three stages.

4. The method according to any one of the preceding claims, **characterised in that**, for the purpose of monitoring an operational capability, at least one parameter of the motor, in particular at least one electromagnetic, thermal or kinematic parameter of the motor is determined and compared with a predetermined specification.

5. The method according to any one of the preceding claims, **characterised in that** the fault response is selected before and / or during the carrying out of the fault response.

6. A control means (2) for controlling a robot (1), wherein the control means (2) comprises:
a monitoring means (20) for monitoring the robot;
a monitoring means (10) for monitoring an operational capability and an output quantity of at least one motor (1.1) of the robot;
a fault response means (30) for carrying out a selected one of a number of predetermined fault responses on the basis of the monitoring of the robot; and
a selection means (40) for selecting the fault response on the basis of a monitoring of an operational capability and an output quantity of at least one motor of the robot, wherein the control means is set up to carry out the method according to any one of the preceding claims.

7. The control means according to the preceding claim, **characterised by** a first control means (50) for controlling the motor in a normal mode of operation and a second control means (30), which is different therefrom, for controlling the motor in the event of a fault response.

8. The control means according to any one of the preceding claims 6 to 7, **characterised in that** the monitoring means for monitoring an operational capability comprises a determining means (11) for determining at least one parameter of the motor, in particular an electromagnetic, thermal or kinematic parameter of the motor, and a comparing means (12) for comparing this parameter with a predetermined specification.

9. The control means according to any one of the preceding claims 6 to 8, **characterised in that** the output quantity comprises a force, in particular a torque, and / or an integral quantity thereof, in particular a work and / or a power.

10. A robot (1) comprising several drive motors (1.1), in particular at least six drive motors (1.1), and a control means (2) according to any one of the preceding claims 6 to 9 for controlling these drive motors.

11. A computer program product comprising a program code which is stored on a medium which is readable by a computer, comprising instructions which cause the device according to any one of the claims 6 to 10 to carry out the method steps according to any one of the claims 1 to 5.

## Revendications

1. Procédé de commande d'un robot (1), avec les étapes :
la surveillance du robot (S1) ; et
la réalisation (S4) d'une sélectionnée d'un nombre de réactions d'erreur prédéfinies sur la base de la surveillance du robot ;
dans lequel la réaction d'erreur est sélectionnée sur la base d'une surveillance (S2) d'une fonctionnalité et d'une grandeur de sortie au moins d'un moteur (1.1) du robot (S3),
**caractérisé en ce que**
le nombre de réactions d'erreur prédéfinies comporte au moins une réaction d'erreur avec moteur actif, en particulier un frein moteur avec ou sans séparation d'énergie ultérieure, une régulation de souplesse et/ou un mouvement de retour, et au moins une réaction d'erreur avec moteur passif, en particulier une séparation d'énergie immédiate sans frein moteur,
dans lequel la grandeur de sortie comporte une force, en particulier un couple, et/ou une grandeur intégrale de celle-ci, en particulier un travail et/ou une puissance.

2. Procédé selon la revendication 1, **caractérisé en ce que** le moteur est commandé dans un fonctionnement normal par un premier moyen de commande (50) et lors d'une réaction d'erreur par un second moyen de commande (30) différent de celui-ci.

3. Procédé selon l'une des revendications précédentes, **caractérisé en ce que** la surveillance d'une fonctionnalité comporte une classification au moins à deux étapes en particulier au moins trois d'une fonctionnalité.

4. Procédé selon l'une des revendications précédentes, **caractérisé en ce que** pour la surveillance d'une fonctionnalité au moins un paramètre, en particulier électromagnétique, thermique ou cinématique du moteur est déterminé et est comparé à une spécification prédéfinie.

5. Procédé selon l'une des revendications précédentes, **caractérisé en ce que** la réaction d'erreur est sélectionnée avant et/ou pendant la réalisation de la réaction d'erreur.

6. Moyen de commande (2) pour la commande d'un robot (1), avec :
un moyen de surveillance (20) pour la surveillance du robot ;
un moyen de surveillance (10) pour la surveillance d'une fonctionnalité et d'une grandeur de sortie au moins d'un moteur (1.1) du robot ;
un moyen de réaction d'erreur (30) pour la réalisation d'une sélectionnée d'un nombre de réactions d'erreur prédéfinies sur la base de la surveillance du robot ; et
un moyen de sélection (40) pour la sélection de la réaction d'erreur sur la base d'une surveillance d'une fonctionnalité et d'une grandeur de sortie au moins d'un moteur du robot, dans lequel le moyen de commande est conçu pour la réalisation du procédé selon l'une des revendications précédentes.

7. Moyen de commande selon la revendication précédente, **caractérisé par** un premier moyen de commande (50) pour la commande du moteur dans un fonctionnement normal et un second moyen de commande différent de celui-ci (30) pour la commande du moteur en cas de réaction d'erreur.

8. Moyen de commande selon l'une des revendications précédentes 6 à 7, **caractérisé en ce que** le moyen de surveillance présente pour la surveillance d'une fonctionnalité un moyen de détermination (11) pour la détermination d'au moins un paramètre, en particulier électromagnétique, thermique ou cinématique du moteur et un moyen de comparaison (12) pour la comparaison de ce paramètre avec une spécification prédéfinie.

9. Moyen de commande selon l'une des revendications précédentes 6 à 8, **caractérisé en ce que** la grandeur de sortie comporte une force, en particulier un couple, et/ou une grandeur intégrale de celle-ci, en particulier un travail et/ou une puissance.

10. Robot (1) avec plusieurs moteurs d'entraînement (1.1), en particulier au moins six, et un moyen de commande (2) selon l'une des revendications précédentes 6 à 9 pour la commande de ces moteurs d'entraînement.

11. Produit de programme informatique avec un code de programme, qui est enregistré sur un support lisible par un ordinateur, comprenant des ordres qui ont pour effet que le dispositif selon l'une des revendications 6 à 10 réalise les étapes de procédé selon l'une des revendications 1 à 5.
